# EUROPEAN PATENT APPLICATION

(11) **EP 2 829 849 A1**
(43) Date of publication of application: **28.01.2015**
(21) Application number: 12871876.4
(22) Date of filing: 21.03.2012
(51) Int. Cl.: G01D 21/00

(54) **SENSOR DEVICE**

(71) Applicant: Hitachi, Ltd., Tokyo 100-8280 (JP)
(72) Inventor: JEONG, Heewon, Tokyo 100-8280 (JP)
(74) Representative: MERH-IP Matias Erny Reichl Hoffmann
(86) International application number: PCT/JP2012/001909
(87) International publication number: WO 2013/140438

(57) **Abstract**

In order to provide a suitable sensor device for a sensor system in which a plurality of request sources request the acquisition of information for the same sensor, the sensor device is provided with a physical mass sensing unit (1) for measuring an external physical mass, an input-output unit (4) for receiving physical mass acquisition requests from the external plurality of request sources, and a first counter (3) for counting and storing the total number of times the input/output unit receives an acquisition request from the plurality of request sources. The input-output unit transmits the physical mass and a value stored by the first counter to the request source of the acquisition request.

## Description

### TECHNICAL FIELD

The present invention relates to a sensor device to measure a physical quantity in the outside. More specifically, it relates to a sensor device to receive an acquisition request for a physical quantity from a plurality of request sources.

### BACKGROUND ART

Due to promotion and the like of a smart city and an Intelligent Transportation System (ITS), the environment buried sensor will be further expectedly developed. In this situation, there has been proposed a method to efficiently collect information from sensors widely dispersed in, for example, a road, a building, a railroad, a station, water pipes for water and sewage, a pipeline, or an airport.

For example, patent literature 1 describes an example of the information collecting method. In patent literature 1, there has been described a technique in which an acquisition request for information of a sensor at a desired position is issued from a remote post connected to a fixed network by use of a query; and when a query transferred from a proxy device to a mobile body having registered positional information matched to an area designated by this query is received, the sensor information received by the pertinent mobile body is transmitted via the fixed network to the remote post that is the transmission source of the received query. It has been described that by using such information collecting method, a particular request source is capable of collecting information from a sensor in a particular area and in a particular time zone.

Patent literature 2 describes a method to collect information by designating a particular sensor. Specifically, there has been described a method in which a mobile reader collects identification information of a ubiquitous node such as an RFID located in a communication area thereof and requests, based on the identification information, information transmission by designating a particular ubiquitous node. It has been described that by applying this method, it is possible to prevent collision of information at transmission of originating information and it is possible to reduce power consumption since information is transmitted only when a request is received.

### CITATION LIST

PATENT LITERATURE 1 JP-A-2004-362267
PATENT LITERATURE 2 JP-A-2006-304168

### SUMMARY OF INVENTION

### TECHNICAL PROBLEM

However, for a sensor system in which a plurality of request sources issue an acquisition request for information to one and the same sensor, no report example has been found. Particularly, no report example has been found for a problem in a situation in which a plurality of request sources install sensors to output almost equal information for different purposes in adjacent places as well as a problem of maintenance and management of sensors in association with use of a tremendously large number of sensors.

For example, in roads, facilities of different managing companies such as water pipes for water and sewage and gas plumbing are buried and the road managing company installs sensors to manage roads, and the water and sewage managing company and the gas plumbing managing company install sensors to manage water and sewage. These sensors, although having different installing purposes and request sources, measure physical quantities common thereto such as temperature, humidity, and vibration in many cases.

Further, when burying the sensors in the environment, the wiring work for power sources and output signal lines is difficult in many cases; hence, recently, there has been adopted in many cases a transmission and reception scheme for measured information by using radio communication driven by batteries. However, for a sensor using a battery, since it is required to replace the battery sooner or later, the periodical maintenance and repair is required for the sensor. Also, depending on the utilization frequency and the utilization period of the sensor, there arises a problem of deterioration in reliability of the measured information due to deterioration in sensor performance. In addition, in a situation wherein a plurality of request sources, which do not mutually share information, access one and the same sensor, it is difficult to grasp how long the sensor has been used. Moreover, also for the replace work of the sensor, it is required that the history of the installation place, installation time, and the like of the sensor is managed for each sensor for a long period of time and to precisely instruct which ones of the tremendously large number of sensors are to be replaced.

As above, in the sensor system in which a plurality of request source issues an acquisition request for information to one and the same sensor, it is required to consider the problems which are not taken into consideration in the prior art. The object of the present invention is to provide a sensor device suitable for the sensor system above.

### SOLUTION TO PROBLEM

Representative means to solve the problem according to the invention of the present application will be exemplified as a sensor device, characterized by comprising a physical quantity sensing unit to measure a physical quantity in the outside; an input-output unit to receive an acquisition request for the physical quantity from a plurality of request sources in the outside; and a first counter which counts and stores the total of the number of operations conducted by the input-output unit to receive the acquisition request from the plurality of request sources, wherein the input-output unit transmits to the request source of the acquisition request, the physical quantity and the value stored in the first counter.

### ADVANTAGEOUS EFFECTS OF INVENTION

According to the invention of the present application, it is possible to provide a sensor device more suitable for a sensor system in which a plurality of request sources issue an acquisition request for information to one and the same sensor.

### BRIEF DESCRIPTION OF DRAWINGS

[FIG. 1] FIG 1 is a schematic overall configuration diagram of a sensor with counter in a first embodiment.
[FIG. 2] FIG 2 is a configuration diagram of the sensor with counter in the first embodiment.
[FIG 3] FIG 3 is a correlation diagram of a sensor with counter in a second embodiment.
[FIG 4] FIG. 4 is a flowchart of information of the sensor with counter in the second embodiment.
[FIG 5] FIG. 5 is a correlation diagram of an information transmission history storing unit of the sensor with counter in the second embodiment.

### DESCRIPTION OF EMBODIMENTS

In the embodiments below, if necessary for convenience, the embodiment will be divided into a plurality of sections or embodiments in the description; however, excepting the case that is particularly demonstrated, these are not independent of each other, but are in a relationship in which one is a variation(s) of part or all of the other, a detailed description, a supplementary description, or the like.

Also, in the embodiments below, when the number of elements and the like (including the number, the numeric value, the quantity, the range, and the like) are cited, excepting the case that is particularly demonstrated, the case in which the embodiment is clearly limited in principle to the particular number, and the like, the embodiment is not limited to the particular number, but the number may be more than or less than the particular number.

Additionally, in the embodiments below, the constituent components (including component steps and the like) are not necessarily required, excepting the case that is particularly demonstrated, the case in which the components are clearly required in principle, and the like.

Similarly, in the embodiments below, when contours, positional relationships, and the like of the constituent components are cited, excepting the case that is particularly demonstrated, the case in which the components are obviously inappropriate in principle, and the like, it is assumed that those substantially approximate to or analogous to the contours or the like are included. This also applies to the numeric value and the range described above.

Moreover, in all drawings to explain the embodiments, the same reference numerals are assigned to the same members in principle, and redundant explanation thereof will be avoided to the maximum extent. Next, description will be given in detail of embodiments of the present invention by use of the drawings and the flowchart.

### FIRST EMBODIMENT

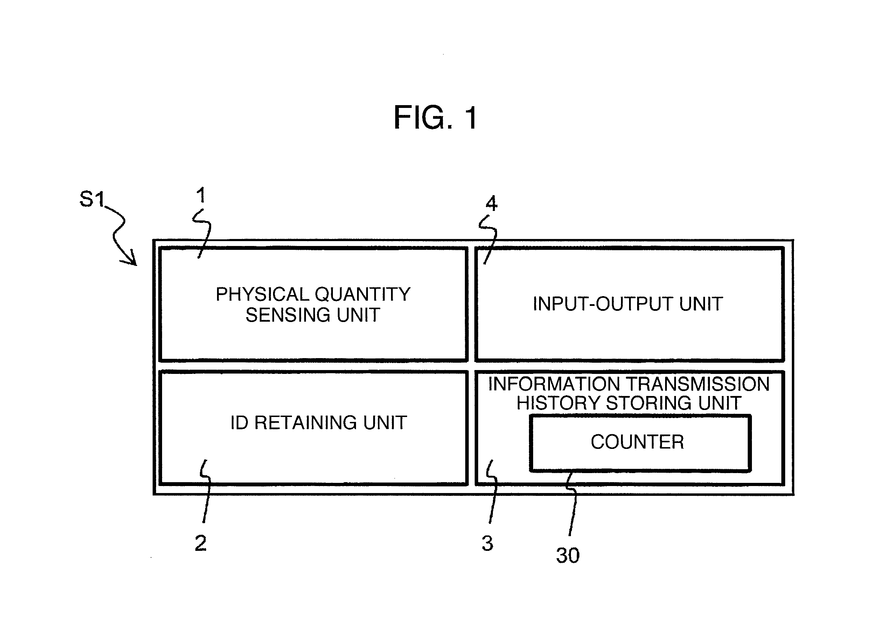

Description will be given of a sensor with counter in the first embodiment of the present invention by referring to the drawings. FIG 1 is a schematic diagram showing an overall configuration of a sensor with counter S 1 as an example of the sensor device in accordance with the present invention.

The sensor with counter S 1 of the present embodiment includes a physical quantity sensing unit 1 to measure physical quantities such as temperature, pressure, velocity, positions, acceleration, angular velocity, and the like required to maintain and to repair infrastructure such as a road, a building, a bridge, water pipes for water and sewage, gas plumbing, and the like; an ID retaining unit 2 to identify a sensor, an information transmission history storing unit 3 in which the value changes in association with an acquisition request from the outside, and an input-output unit 4 which conducts, by wire or by radio, reception of an acquisition request from the outside and transmission of the measured value from the physical quantity sensing unit 1, a sensor ID, and information transmission history information.

Description will be given of respective constituent components of the sensor S1.

The physical quantity sensing unit 1 includes a temperature sensing unit based on the principle of the already well known thermistor and the thermocouple scheme, a pressure sensing unit which senses the variation of external pressure through the quantity of deformation of a diaphragm or the like as a change of electrostatic capacity or a change of electric resistance value, a humidity sensing unit which uses a change in permittivity or conductivity due to absorption of water by a humidity sensing body, a velocity sensing unit which uses the Doppler phenomenon, positional information due to position measurement by GPS or positional information beforehand stored in the sensor, an acceleration and angular velocity sensing unit to sense the positional change of a mobile body based on a change of electrostatic capacity or the like, and all of or a combination of part of the gas sensing units to measure a change of conductivity caused by a chemical reaction between a particular gas and a catalyzer; and the physical quantity sensing unit 1 stores therein physical quantities sensed by these sensing units by use of a non-volatile memory, not shown.

Next, the ID retaining unit 2 of the sensor is a non-volatile memory to store therein a unique value to identify a sensor, and the owner of the sensor manages the installation place, the installation time, and the like of the sensor by use of the value stored in the ID retaining unit 2 of the sensor.

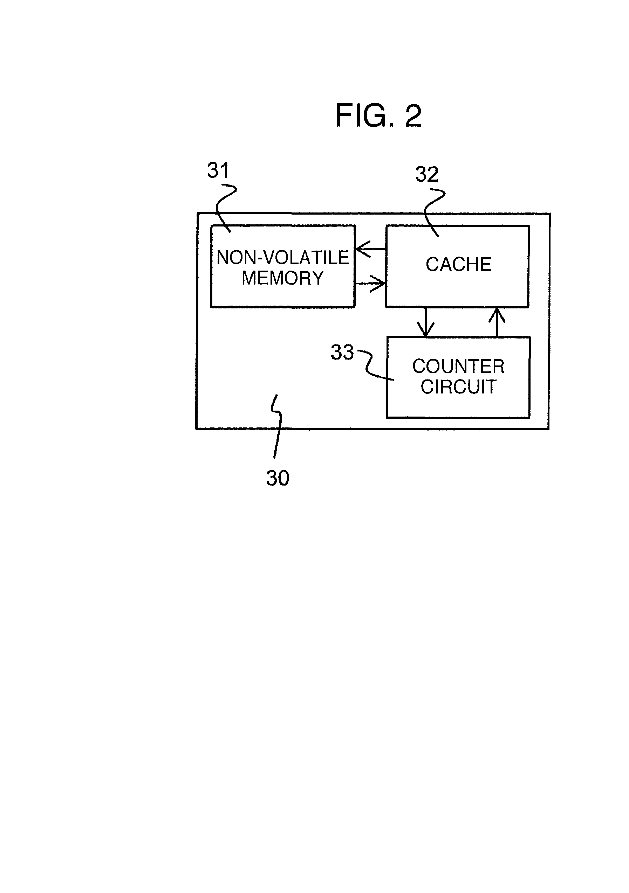

Next, description will be given of the information transmission history storing unit 3. The information transmission history storing unit 3 is equipped with a counter 30 the numeric value of which is increased by one each time information is outputted from the sensor S 1 in response to an event in which an acquisition request for a physical quantity from the outside sensed by the physical quantity sensing unit is inputted to the input-output unit 4, which will be described later. FIG 2 is a schematic diagram showing a configuration of the counter 30. The counter 30 is configured by including a non-volatile memory 31 to store therein counter information even when the power source is lost, a provisional memory 32, and a counter circuit 33 employing a flip-flop circuit. When an acquisition request is inputted from the outside to the counter 30 configured as above, the counter information stored in the non-volatile memory 31 is dumped in the cache 32 as a provisional storing place. Thereafter, the counter circuit 33 increases the numeric value stored in the cache 32 by one, and the value of the cache 32 is again stored in the non-volatile memory 31. Here is shown a configuration as an example of the counter including the counter circuit of flip-flop type 33, the cache 32, and the non-volatile memory 31 configured using a flash memory or the like; however, according to the gist of the present invention, it is only necessary that the value in the sensor is changed and the value is stored in response to an acquisition request from the outside by use of some means, and is not limited to the configuration of the counter 30 shown in FIG. 2.

Here, the counter 30 shown in FIG 2 is characterized in that without discriminating the request source of the acquisition request, the counter 30 counts and stores the total of the number of operations conducted to receive the acquisition request for a physical quantity from a plurality of request sources. Advantageous effects due to the sensor S1 including the counter 30 above will be described later. Also, as will be explained in conjunction with the second embodiment, it is possible to dispose a counter which further discriminates the request source and which counts and stores, for each of the request sources, the total of the number of operations conducted to receive the acquisition request.

Next, the input-output unit 4 will be described. The input-output unit 4 receives by wire or by radio an acquisition request from the outside and transmits to the request source, by wire or by radio, information of a physical quantity measured by the physical quantity sensing unit 1, the value store in the ID retaining unit 2, and the value stored in the non-volatile memory 31 of the counter 30. Here, the request source corresponds to the mobile body indicated in the information collecting technique of patent literature 1. Specifically, it is an information collecting terminal (such as a car navigation system including a two-way communication function) to be mounted on a running car or a cellular phone carried around by a walking person. The information collected by these information collecting terminals is transmitted to a remote host via a fixed network also disclosed by the prior art. Here, the remote host corresponds to a managing company to manage roads and pipelines by use of information from the sensor S1. Naturally, the information may be collected in the method disclosed by patent literature 1 or patent literature 2 cited in the present application; however, the sensor with counter S1 of the first embodiment is not restricted by the information collecting methods of patent literature 1 and patent literature 2.

Subsequently, description will be given in detail of the advantageous effects obtained by using the sensor device according to the present embodiment.

The sensor device according to the present embodiment includes as described above a counter not discriminating the request source of the acquisition request. The counter serves a function as so-called an absolute counter for the sensor device. Hence, when setting life with respect to performance of the sensor device, it is possible to use the information stored in the counter. For example, in the sensor S1, through repetitious activation and repetitious radio transmission, there take place deterioration of electronic parts of various electronic circuits including transistors and OP amplifiers and a change with the passage of time in the state of packaging such as an event in which a fixing position is loosened. When these changes exceed a fixed level, the sensor 1 reaches the end of life with respect to performance; as the judge criterion for this, it is possible to use the value of the counter 30, and based on the information, the sensor S1 may be replaced in the same way as for the replacement of the battery.

Further, when collecting environmental information from a designated area, it can be considered that information is received from a plurality of sensors S1. In this situation, depending on a phenomenon to be analyzed, the phenomenon analysis may also be conducted with higher reliability by selecting for use the information for which the value of the counter 30 is younger or is within a fixed range.

Moreover, as the number of environment buried sensors becomes larger, power source work and wiring work for data input-output lines become more difficult; hence, there are required environment buried sensors which are driven by a battery and which are capable of conducting radio transmission and reception. Hence, it can be considered that the sensor S 1 is driven by a battery. In this situation, the sensor S1 ordinarily waits for operation in a slip mode, to lower consumption of the battery to the maximum extent. In this state, when an acquisition request is inputted from the outside to the input-output unit 4 of the sensor S1, the mode thereof changes to the activation mode, to transmit information to the request source. In this situation, the quantity of consumed power required for the one activation and information transmission can be easily calculated or measured; hence, it is possible to calculate, based on the capacity of the battery disposed, the number of operations for information transmission and activation which can be conducted. That is, by using the information (counter information) recorded in the counter 30, the number of uses thereafter can be predicted. The managing company to maintain and to repair the sensor S 1 can replace the sensor S 1 or the battery thereof in the coverage area of the company while referring to the counter information on site. Particularly, in a situation in which the owner of the sensor S 1 differs from the managing company in charge of the maintenance and repair, even when detailed information such as the history and the installation place of the sensor S1 are not supplied, the job can be carried out based on the sensor position and the counter information which can be confirmed from a wireless terminal on site in the coverage area; hence, it is possible to reduce the cost required for the maintenance and repair of the sensor S1. The counter 30 shown in FIG. 2 can be configured, although not shown, by a combination of a first counter circuit which keeps the value stored therein even when the battery is replaced and the stored value of which continuously increases from when it is set to zero at delivery thereof to when it reaches the end of life and a second counter circuit the stored value of which is set to zero by a command from the outside when the battery is replaced or the like. In this situation, after the replacement of the battery, by setting the value of the second counter circuit to zero, it is possible to know the replacing time of the battery based on the value of the second counter circuit.

The sensor with counter according to the present embodiment can fulfill the advantageous effects of the present invention in a situation in which a plurality of infrastructure managing companies install environment buried sensors in mutually overlapping particular areas and the respective infrastructure managing companies can independently access the sensors of each other (can share the sensors) and the maintenance and repair of a sensor under consideration is conducted for each area by a sensor repair company other than the infrastructure managing companies described above. A detailed operation mode and the like will be described in detail in conjunction with the other embodiment.

As described above, by assigning the counter function to the environment buried sensor, it is possible to conduct highly reliable information analysis and to considerably reduce the cost required for the maintenance and repair of the sensor.

### SECOND EMBODIMENT

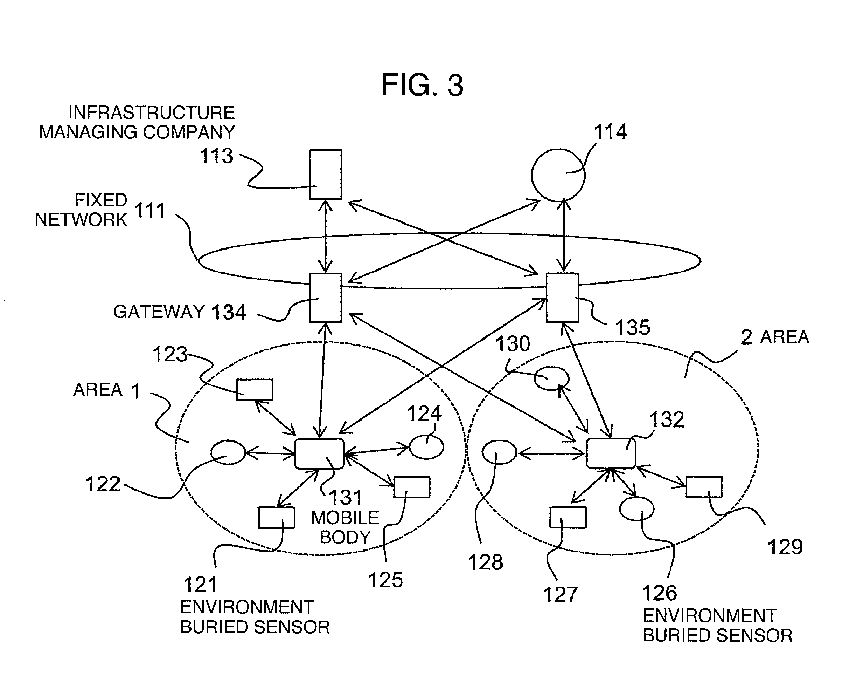

The second embodiment will be described by referring to FIGS. 3 to 5. In this connection, the items which are described in the first embodiment and which are not described in the present embodiment also applies to the present embodiment unless particular reasons are present. FIG 3 is a diagram schematically showing the main configuration associated with operations such as sharing and maintenance and repair of the sensor with counter according to the present embodiment.

In the second embodiment, it is assumed that there exist a plurality of infrastructure managing companies 113, 114 and the respective infrastructure managing companies 113, 114 install, in order to measure environments of the infrastructure under control thereof, sensor devises according to the present embodiment as environment buried sensors 121, 123, 125, 127, 129 and 122, 124, 126, 128, 130 in areas 1 and 2. Although not particularly limited, to easily image the contents of the invention, it is assumed that the managing company 113 is a road enterprise and the managing company 114 is an enterprise for water and sewage and gas. In general, pipes of water and sewage and gas plumbing are buried under or beside a road in many cases. While the managing companies 113, 114 install, in order to collect information of maintenance and repair of the road or the plumbing, the environment buried sensors 121 to 130, it is required to install many sensors to obtain information with high precision. However, when each of the companies installs and manages many sensors, there are required tremendously high initial installation cost and tremendously high maintenance and repair cost.

The information required for the maintenance and repair of roads includes as environmental information such as temperature, humidity, and vibration; also for the maintenance and repair of water and sewage and gas plumbing, the required information includes information required for gas leakage sensing and many items common to the information required for the road management such as temperature, humidity, and vibration. Hence, when the managing companies 113, 114 share the sensors 121 to 130 of each other, it is possible, while suppressing the initial installation cost and the sensor maintenance and management (operation) cost, to obtain information with high precision.

Also, for the maintenance and repair of environment buried sensors, it is efficient that each of the infrastructure managing companies 113, 114 does not independently conduct the maintenance and repair and the area is divided such that different special repair companies conduct the maintenance and repair for the respective areas (area 1,area 2). For example, the area is favorably divided for each of the self-governing bodies such as a prefecture, a ward, and a city. Here, a situation in which the areas 1 and 2 shown in FIG 3 indicate areas associated with distance of several meters to several tens of meters, which are communicable distance between the mobile bodies 131, 132 and the environment buried sensors 121 to 130 and a situation in which they indicate areas of a prefecture, a ward, and a city as the coverage ranges of repair companies 141, 142 of the sensors are mixedly employed.

In conjunction with the present embodiment, description will be given in detail of the function of the sensor with counter in a situation wherein the plurality of infrastructure managing companies (113, 114) install the environment buried sensors (121 to 130) in the particular areas (area 1,area 2) in which the coverage areas overlap with each other, and are capable of mutually and independently accessing the sensors (sharing the sensors); moreover, the sensor maintenance and repair is conducted for the respective areas (area 1,area 2) by the sensor repair companies 141,142 (not shown) different from the infrastructure managing companies (113, 114).

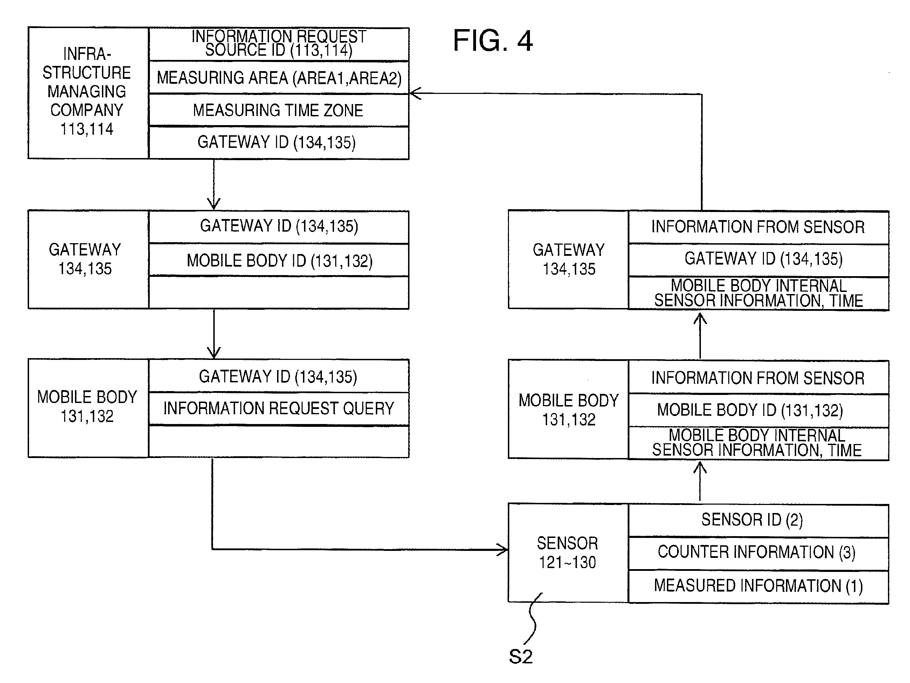

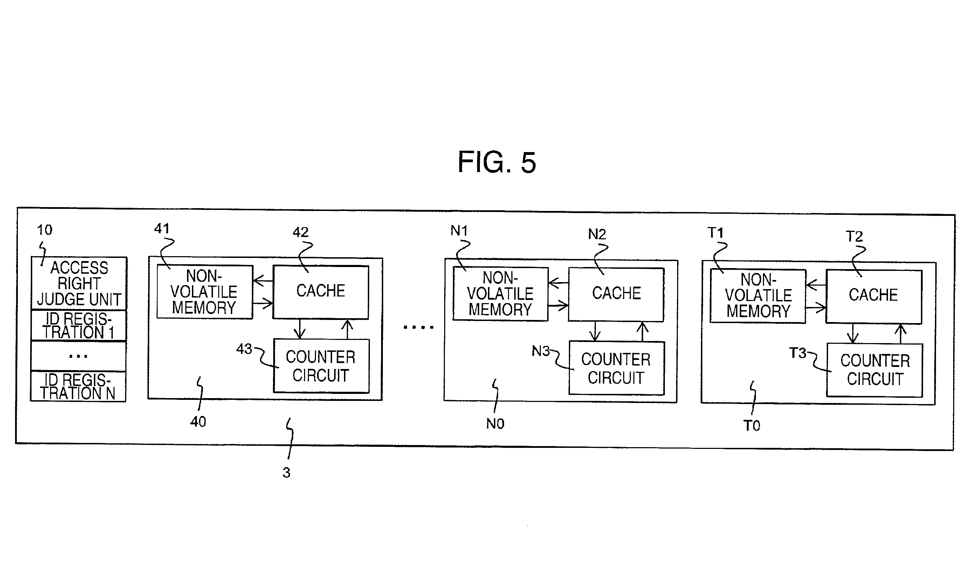

FIG. 4 is a correlation diagram to explain the sensor with counter S2 and the flow of measured information in the present embodiment. Details will be described by also using the operation diagram of the sensor with counter S2 of FIG. 3 and the configuration diagram of the information transmission history storing unit 3 of FIG 5. First, the infrastructure managing companies 113, 114 transmit request source IDs (113,114) and areas (area1,area 2) and time zones for the measurement of environment information, to contracted gateways 134, 135. Here, the gateways 134, 135 correspond to locations such as cellular phone enterprises which have grasped the positions of the mobile bodies 131, 132.

The gateways 134, 135 transmit, based on the acquisition requests from the infrastructure managing companies 113, 114, IDs of the gateways 134, 135 or IDs of the infrastructure managing companies 113, 114 as the request sources and the associated mobile IDs (131,132) to the mobile bodies 131, 132 which are running or walking in the designated areas (area1,area 2) and in the designated time zones.

The mobile bodies 131, 132 issue information requests to the environment buried sensors by transmitting, as acquisition requests to the sensors, the IDs of the gateways 134, 135 or the IDs of the infrastructure managing companies 113, 114 as the request sources.

When the IDs of the gateways 134, 135 or the IDs of the infrastructure managing companies 113, 114 as the request sources have been installed in the information transmission history storing units 3 of the sensors 121 to 130 shown in FIG 5 and have been registered to an access right judge unit 10 which is a non-volatile memory to store therein the respective IDs of the request sources, the environment buried sensors 121 to 130 increase the values of counters 40-N0 corresponding to the request sources by one and the value of counter storing the total access count by one and transmit the values stored in the sensor ID retaining unit 2, the environment measured value from the physical quantity sensing unit 1, and the counter information to the mobile bodies 131, 132.

The mobile bodies 131, 132 return, to the gateways 134, 135, the information from the environment buried sensors 121 to 130, and according to necessity, information of the sensors incorporated in the mobile bodies 131, 132, time information, and the IDs of the mobile bodies 131, 132.

The gateways 134, 135 add the IDs of the gateways 134, 135 to the information from the mobile bodies 131, 132 and then return the resultant information to the infrastructure managing companies 113, 114 as the request sources.

As above, the sensor device according to the present embodiment is characterized by including, in addition to counter which counts and stores therein the total of the number of operations conducted to receive the acquisition request from a plurality of request sources, a plurality of counters 40 to N0 each of which counts and stores therein, for each of the plurality of request sources, the total of the number of operations conducted to receive the acquisition request. Due to the characteristic, it is possible to measure life of the sensor device by use of the value stored in counter T0; further, the counters 40 to N0 make is possible to conduct accounting of the quantity of information for each of the request sources.

And, by using the sensor device above and by using the information flow and the operation of information described above, the infrastructure managing companies 113, 114 are capable of acquiring the environmental information in the required places and in the required time zones while mutually sharing the sensors of each other.

Further, although any detailed scheme will not be described, since the information path is unmistakable, the information charge may be paid by the respective parties concerned, in a shared fashion according to necessity. Also, since the infrastructure managing companies 113, 114 can mutually and independently access the sensors of each other, even when there exists no competitive relationship or no information exchange, it is possible to collect environmental data by using the sensors of each other without leaking information.

In the access right judge unit 10 shown in FIG. 5 of the information transmission history storing unit 3; although not shown, based on the information from the outside of the sensor device, an additional ID and an associated counter thereof may be registered later or an unnecessary ID and its associated counter may be deleted. Hence, when assigning the access right to sensors to a new infrastructure managing company, it is only necessary to additionally register an ID to the access right judge unit 10.

Next, description will be given of a situation in which third and fourth sensor repairing and managing companies manage the environment buried sensors 121, 123, 125, 127, 129 and the environment buried sensors 122, 124, 126, 128, 130 owned by different owners, for the respective areas (area 1,area 2). For example, for the environment buried sensors buried in a wide range of a national road and an express highway, a plurality of infrastructure managing companies 113, 114 entrust the sensor repair job to special sensor repair companies 141, 142 (not shown) for each area (area 1,area 2) depending on cases. The sensor repair companies 141, 142 receive information required for the replacement and repair (battery replacement) of the sensors from the respective infrastructure managing companies 113, 114 and carry out the actual job.

However, in a situation in which the environment buried sensors 121 to 130 are shared between the plural infrastructure managing companies 113, 114, in order to grasp the utilization frequency and the like of the sensors, complicated procedures are required, for example, it is required that the infrastructure managing companies 113, 114 share the access histories corresponding to IDs of the sensors. Here, by using the counter information, it is only required to replace the sensors each of which exceeds the number of operations beforehand instructed by the infrastructure managing companies 113, 114; hence, the maintenance and management can be conducted for the sensors even when complicated job instructions are not given.

Incidentally, although the details will not be again described, also in the sensor with counter S2 of the present embodiment, there can be obtained advantageous effects similar to those obtained when the counter information described in conjunction with the first embodiment is employed.

### REFERENCE SIGNS LIST

S1: Sensor with counter, S2: Sensor with counter, 1:Physical quantity sensing unit, 2:ID retaining unit, 3:Information transmission history storing unit, 4:Input-output unit, 10:Access right judge unit, 30:Counter, 31:Non-volatile memory, 32:Cache, 33:Counter circuit, 40:Counter, 41: Non-volatile memory, 42:Cache, 43:Counter circuit, N1: Non-volatile memory, N2:Cache, N3:Counter circuit, T0:Counter, T1: Non-volatile memory, T2:Cache, T3:Counter circuit, 111:Fixed network, 113: Infrastructure managing company, 114: Infrastructure managing company, 121-130: Environment buried sensor, 131:Mobile body, 132:Mobile body, 134:Gateway, 135:Gateway, 141:Sensor repair company, 142:Sensor repair company.

## Claims

1. A sensor device, **characterized by** comprising:
a physical quantity sensing unit to measure a physical quantity in the outside;
an input-output unit to receive an acquisition request for the physical quantity from a plurality of request sources in the outside; and
a first counter which counts and stores the total of the number of operations conducted by the input-output unit to receive the acquisition request from the plurality of request sources, wherein
the input-output unit transmits to the request source of the acquisition request, the physical quantity and the value stored in the first counter.

2. A sensor device according to claim 1, **characterized by** further comprising a second counter which counts and stores, for each of the plurality of request sources, the total of the number of operations conducted to receive the acquisition request.

3. A sensor device according to claim 2, **characterized by** further comprising a non-volatile memory to store therein ID information of each of the plurality of request sources.

4. A sensor device according to claim 3, **characterized in that** the sensor device adds ID information to the non-volatile memory or deletes the ID information stored in the non-volatile memory based on a command input from the outside.

5. A sensor device according to claim 1, **characterized by** further comprising a battery to drive the sensor device, wherein
the first counter comprises a first counter circuit which retains values selected from the values obtained by counting the number of operations conducted to receive the acquisition request from the plurality of request sources and in which the values thus selected are retained even when the battery is replaced and a second counter circuit in which the values stored therein are set to zero when the battery is replaced.
